# EUROPÄISCHE PATENTSCHRIFT

(11) **EP 1 944 522 B1**
(45) Veröffentlichungstag und Bekanntmachung des Hinweises auf die Patenterteilung: **17.06.2015**
(21) Anmeldenummer: 08000160.5
(22) Anmeldetag: 07.01.2008
(51) Int. Cl.: F16D 65/14

(54) **Scheibenbremse**
Disc brake
Frein à disque

(30) Priorität: 13.01.2007 DE 102007001960
(43) Veröffentlichungstag der Anmeldung: 16.07.2008
(73) Patentinhaber: BPW Bergische Achsen KG, 51674 Wiehl (DE)
(72) Erfinder: Dowe, Günter, 51588 Nümbrecht (DE)
(74) Vertreter: Bungartz Christophersen Partnerschaft mbB Patentanwälte

(56) Entgegenhaltungen:
- WO-A-01/75324
- WO-A-02/059494
- DE-B3- 10 242 397
- DE-C1- 4 430 258
- DE-C1- 19 515 063
- DE-U1- 29 522 063
- US-A- 3 371 750

## Beschreibung

Die Erfindung betrifft eine Scheibenbremse mit einer über mindestens einen Druckstempel auf einen oder mehrere Bremsbeläge arbeitenden, in einem Gehäuse der Scheibenbremse angeordneten Zuspanneinrichtung, welche einen verschwenkbar gegenüber einer Rückwand des Gehäuses abgestützten Zuspannhebel mit einem Hebelarm aufweist, an dessen freiem Ende ein Kraftglied angreift, wobei der Zuspannhebel dem Druckstempel zugewandt mit einer gekrümmten Druckübertragungsfläche versehen ist, deren Krümmungs-Bezugslinie parallel versetzt zu der Schwenkachse des Zuspannhebels liegt, und der Zuspannhebel auf einem in das Gehäuse einsetzbaren Bolzen sitzt, der, der Drucküberttagungsfläche abgewandt, auf mehreren Längsabschnitten in Stützschalen abgestützt ist, wobei die Stützschalen an Vorsprüngen ausgebildet sind, die an der Rückwand des Gehäuses ausgebildet sind.

Eine mit einer solchen Zuspanneinrichtung versehene Scheibenbremse ist aus der WO 2006/111149 A1 bekannt. Das Gehäuse der Scheibenbremse weist nahe seiner Rückwand ein zylindrisch gestaltetes Stützelement auf. Darauf ist der Zuspannhebel verschwenkbar gelagert. Diese Anordnung bereitet in der Praxis Probleme bei der Montage des Zuspannhebels in dem Gehäuses.

Eine weitere Scheibenbremse mit einer solchen Zuspanneinrichtung ist aus DE 195 15063 C1 bekannt.

Die DE 32 13 356 A1 offenbart eine Scheibenbremse mit einem Bremssattel aus zwei zueinander parallelen Seitenflanschen, zwischen denen der Zuspannhebel verschwenkbar angeordnet ist. Zu diesem Zweck nehmen die Seitenflansche die beiden Endabschnitte eines kräftig dimensionierten, gegen Drehen gesicherten Bolzens auf, auf dem ein zylindrisch gestalteter, jedoch bezüglich der Bolzenachse exzentrisch angeordneter Kern des Zuspannhebels gelagert ist. Mit dem Hebelarm des Zuspannhebels ist der Kern durch einen Stift drehfest verbunden. Da sie mit einem erhöhten Aufwand verbunden ist, bereitet auch die Montage dieser Scheibenbremse Probleme. Von Nachteil ist ferner die erforderliche kräftige Dimensionierung des Bolzens, der dieser ansonsten auf dem langen Abschnitt zwischen den beiden Seitenflanschen des Bremssattels eine erhebliche Durchbiegung erfährt.

Mit der Erfindung angestrebt wird eine verbesserte Montierbarkeit der Zuspanneinrichtung in dem Gehäuses der Scheibenbremse.

Zur **Lösung** wird eine Scheibenbremse mit den Merkmalen von Patentanspruch 1 vorgeschlagen.

Indem der Zuspannhebel auf einem in das Gehäuse der Scheibenbremse einsetzbaren Bolzen sitzt, ergibt sich eine verbesserte Montierbarkeit der Zuspanneinrichtung innerhalb des Gehäuses. Die erheblichen Zuspannkräfte werden über den Bolzen auf mindestens einen an der Rückwand des Gehäuses ausgebildeten Vorsprung abgeführt, an dem der Bolzen sich örtlich abstützt. Eine durch die Zuspannkräfte hervorgerufene Durchbiegung des Bolzens beschränkt sich daher auf kurze Bolzenlängsabschnitte, was eine relativ schlanke Gestaltung des Bolzens ermöglicht.

Vorzugsweise ist der Vorsprung als Stützschale gestaltet, deren gekrümmte Schalenkontur in geeigneter Weise an die Kontur der Mantelfläche des Bolzens angepasst ist. An einer solchen Stützschale kann sich der Bolzen über einen Teilumfang flächig abstützen.

Bevorzugt wird hierbei eine Ausführungsform, welche durch zwei Vorsprünge bzw. Stützschalen mit sich in Bolzenlängsrichtung beiderseits anschließenden Freiräumen gekennzeichnet Ist. Nur auf der Länge der Freiräume vermag sich der Bolzen durchzubiegen.

Erfindungsgemäß sind die Stege Umfangsabschnitte zueinander fluchtender Querbohrungen sind, durch die der Bolzen hindurchführt. Bevorzugt wird hierzu eine Ausführungsform, bei der der Zuspannhebel mit drei Stegen und drei Querbohrungen versehen ist.

Zur Begrenzung der Beweglichkeit des Zuspannhebels in Bolzenlängsrichtung ist es von Vorteil, wenn die an dem Zuspannhebel ausgebildeten Stege in Bolzenlängsrichtung spielfrei oder mit geringem Spiel an die an dem Gehäuse ausgebildeten Vorsprünge anschließen. Zusätzliche Mittel zur Begrenzung der Beweglichkeit des Zuspannhebels in Bolzenlängsrichtung sind auf diese Weise entbehrlich.

Von Vorteil ist, wenn der Bolzen zusätzlich in Bohrungen abgestützt ist, die sich in Gehäuseseitenwänden befinden, welche sich im Wesentlichen quer zur Bolzenlängsrichtung erstrecken.

Ferner vorgeschlagen wird eine Ausgestaltung, bei der die eine der Bohrungen zum Zwecke des Hindurchführens des Bolzens eine zu dem Bolzen fluchtende Gehäuseöffnung ist, deren Größe mindestens gleich dem Bolzenquerschnitt ist.

Mit einer weiteren Ausgestaltung wird vorgeschlagen, dass das Gehäuse im Bereich des anderen Bolzenendes mit einer zu der ersten Gehäuseöffnung fluchtenden, weiteren Gehäuseöffnung versehen ist. Vorzugsweise ist die geringste Querschnittsgröße der weiteren Gehäuseöffnung geringer als der Bolzenquerschnitt.

Ferner wird vorgeschlagen, dass die weitere Gehäuseöffnung zweistufig ist, wobei der mehr gehäuseeinwärts gelegene Öffnungsabschnitt der Größere ist, und den Endabschnitt des Bolzens umschließt. Dies führt zu einer Abstützung auch der Bolzenenden gegenüber dem Gehäuse der Scheibenbremse, und damit zu einer Verkürzung jener Bolzenlängsabschnitte, auf denen der Bolzen Biegebelastungen ausgesetzt ist.

Zur axialen Festlegung des Bolzens kann dieser an seiner der weiteren Gehäuseöffnung zugewandten Stirnseite mit einem Gewindesackloch versehen sein, in das eine Schraube eingreift, deren Schraubenkopf sich von außen her an dem Gehäuse abstützt.

Um ein Eindringen von Schmutz und Staub in das Innere des Bremsgehäuses zu verhindern, wird mit einer weiteren Ausgestaltung vorgeschlagen, dass die Gehäuseöffnung und/oder die weitere Gehäuseöffnung durch das zumindest teilweise Hineinragen eines Endabschnitts des Bolzens verschlossen ist. Zusätzlich kann der Endabschnitt des Bolzens durch einen Dichtring gegenüber der Gehäuseöffnung abgedichtet sein.

Weitere Einzelheiten und Vorteile der Erfindung werden nachfolgend anhand von auf der Zeichnung dargestellten Ausführungsbeispielen erläutert. Darin zeigen:
- Fig. 1: eine Stirnansicht auf des Bremssattels einer Scheibenbremse;
- Fig. 2: eine Draufsicht auf den Bremssattel, wobei zusätzlich die Bremsscheibe, zwei Bremsbeläge sowie zwei in einem Gehäuse des Bremssattels geführte Druckstempel dargestellt sind, welche gegen den inneren Bremsbelag arbeiten;
- Fig. 3: eine Seitenansicht des Bremssattels;
- Fig. 4: einen Schnitt entlang der Schnittebene IV - IV der Fig. 3;

- Fig. 5: einen Schnitt entlang der Schnittebene V - V der Fig. 2;
- Fig. 6: einen Schnitt entlang der Schnittebene VI - VI der Fig. 2;
- Fig. 7: eine perspektivische Einzeldarstellung eines schwenkbar in das Gehäuse der Scheibenbremse einsetzbaren Zuspannhebels und
- Fig. 8: eine Prinzipdarstellung der Abstützung des Zuspannhebels gegenüber einem in das Gehäuse eingesetzten Bolzen.

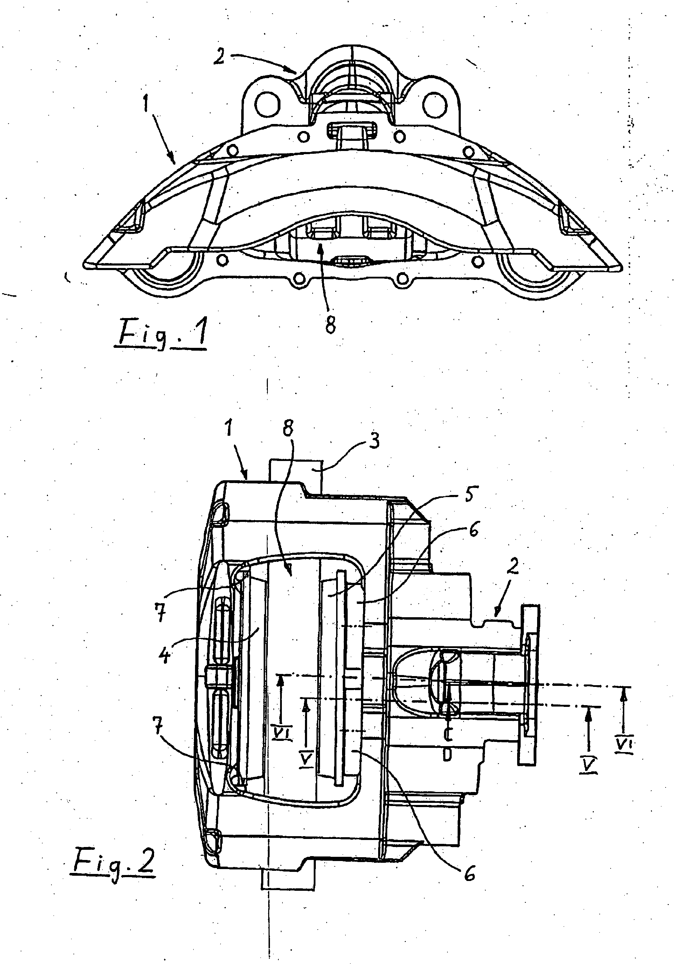

Die Fign. 1, 2 und 3 zeigen in verschiedenen Ansichten den Bremssattel 1 einer Scheibenbremse. Diese Scheibenbremse ist druckluftbetätigt und findet vor allem als Radbremse bei schweren Fahrzeugen Verwendung, z.B. bei Schwerlastanhängem. Die Scheibenbremse kann grundsätzlich nach dem Schwimm- oder nach dem Festsattelprinzip arbeiten. Die hier konkret beschriebene Scheibenbremse arbeitet nach dem Schwimmsattelprinzip mit gleitbeweglich gelagertem Bremssattel. Baulich integriert in den Bremssattel 1 ist ein Bremsgehäuse 2, welches die Zuspanneinrichtung der Scheibenbremse aufnimmt. Ebenfalls in das Gehäuse 2 integriert kann ferner eine Nachstelleinrichtung zur Kompensation des Bremsbelagverschleisses sein. Der Bremssattel 1 einschließlich des integrierten Bremsgehäuses 2 ist also einstückig gefertigt. Jedoch ist auch eine zweiteilige Bauweise möglich, bei der Bremssattel 1 und Gehäuse 2 trennbar sind.

Zur Erläuterung sind in der Draufsicht Fig. 2 auch weitere Teile der Scheibenbremse dargestellt, nämlich die Bremsscheibe 3, welche innenbelüftet sein kann, zwei Bremsbeläge 4, 5 sowie ein Druckstempel 6, der bei Zuspannen der Bremse gegen den innen liegenden Bremsbelag 5 der Scheibenbremse bewegt wird. Der außen liegende Bremsbelag 4 ist unmittelbar im Bremssattel 1 selbst aufgenommen und so gegenüber radialen wie tangentialen Kräften abgestützt. Zu diesem Zweck sind zu dem Belagschacht 8 des Bremssattels 1 hin Aufnahmen 7 angeformt, an denen sich die Rückenplatte des äußeren Bremsbelags 4 im Wesentlichen spielfrei abstützen kann.

Der innen liegende, d.h. dem Druckstempel 6 zugewandte Bremsbelag 5 ist hingegen nicht im Bremssattel 1 selbst geführt, sondern in einem separaten Bremsträger. Dieser ist fest mit der Achse des Fahrzeugs verbunden. Der gegen die Rückenplatte des inneren Bremsbelags 5 anliegende Druckstempel 6 ist bei dem hier beschriebenen Ausführungsbeispiel ein Doppel- bzw. Zwillingsstempel. In den Druckstempel 6 kann eine Nachstelleinrichtung integriert sein.

Zur Erzeugung der Zustellbewegung befindet sich in dem Gehäuse 2 eine Zuspanneinrichtung. Diese kann hinsichtlich ihres prinzipiellen Aufbaus z.B. so gestaltet sein, wie in der WO 2006/111149 A1 beschrieben. Sie weist nahe der Rückwand des Gehäuses einen drehbar abgestützten Zuspannhebel auf. Der Zuspannhebel ist mit einem Hebelarm versehen, an dessen freiem Ende ein Kraftglied angreift, z.B. die Betätigungsstange eines druckluftbetriebenen Bremszylinders. Dem Druckstempel zugewandt weist der Zuspannhebel eine gekrümmte Lagerschale auf, deren Krümmungs-Bezugslinie versetzt zu der Schwenkachse des Zuspannhebels liegt. Die mit einem schalenförmigen Wälzlager versehene Lagerschale stützt sich ihrerseits an einer Kulisse ab, die ein gegenüber dem Druckstempel quer bewegliches Bauteil ist. Auf diese Weise ist es trotz der exzentrischen Bewegung der Lagerschale möglich, den Druckstempel in einer geraden Bewegung in dem Gehäuse oder in dem Bremssattel zu führen, d.h. ohne ein leichtes Verkippen oder Verschwenken des Druckstempels bei der Zuspannung.

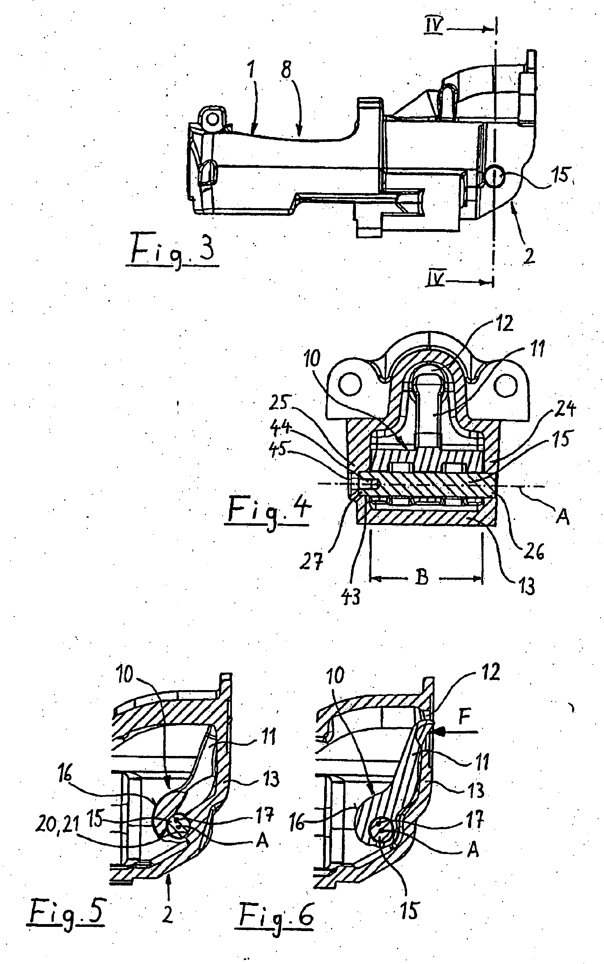

In den Fign. 5 und 6 ist in zwei unterschiedlichen Schnittebenen der Zuspannhebel 10 innerhalb des Bremsgehäuses 2 dargestellt. Einstückiger Bestandteil des Zuspannhebels 10 ist ein Hebelarm 11, dessen freies Ende einer Öffnung 12 in der im Übrigen geschlossenen Rückwand 13 des Gehäuses gegenüberliegt. Die Öffnung 12 in der Rückwand 13 dient dem Durchtritt eines antreibenden Kraftgliedes, z.B. der Betätigungsstange des Bremszylinders. Die Richtung der Krafteinleitung auf den Hebelarm 11 ist in Fig. 6 mit dem Kraftpfeil F bezeichnet. Die Kraft F führt zu einem Verschwenken des Zuspannhebels 10 um eine gehäusefest angeordnete Achse A. Die Achse A ist die Mittelachse eines in das Gehäuse 2 einsetzbaren Bolzens 15.

Zu dem Belagschacht 8 und der Bremsscheibe 3 hin (Fig. 2) kann das Gehäuse 2 völlig offen gestaltet sein. Auf diese Weise ist es möglich, Bauteile der Zuspanneinrichtung oder der Nachstelleinrichtung von dem Belagschacht 8 aus in das Gehäuse 2 ein- oder daraus auszubauen.

Die Fign. 5 und 6 lassen ferner erkennen, dass der Zuspannhebel 10 zu dem Druckstempel hin eine Druckübertragungsfläche 16 aufweist. Diese ist in der Weise gekrümmt, dass die die Geometrie der Krümmung definierende Bezugslinie 17 parallel versetzt zu der Schwenkachse A des Zuspannhebels liegt. Die Druckübertragungsfläche 16 kann eine wälzgelagerte, teilkreisförmige Lagerschale sein, gegen die, wie in der WO 2006/111149 A1 beschrieben, eine quer zu dem Druckstempel bewegliche Kulisse abgestützt sein. Die Lagerschale 16 kann auch ein Gleitlager sein, bevorzugt wird jedoch ein aus einer Vielzahl langgestreckter Wälzkörper zusammengesetztes Segment-Wälzlager als Lagerschale 16. Schließlich kann die Druckübertragungsfläche 16 auch eine sich abwälzende Kontur sein, wie dies zum Beispiel aus der EP 0 824 639 B2 bekannt ist.

Die mit der Zuspanneinrichtung realisierbare Vortriebsbewegung ergibt sich aus dem Versatz bzw. der Exzentrizität der Bezugslinie 17 der gebogenen Lagerschale 16 in Bezug auf die gehäusefest angeordnete Achse A in Gestalt der Mittelachse des Bolzens 15.

Fig. 4 lässt anhand eines anderen Schnitts erkennen, dass der Hebelarm 11 des Zuspannhebels 10 wesentlich schmaler ist, als der Zuspannhebel der Breite B im Übrigen. Der Zuspannhebel 10 ist verschwenkbar auf dem Bolzen 15 gelagert, und er schwenkt auf diese Weise um die geometrisch definierte Achse A .

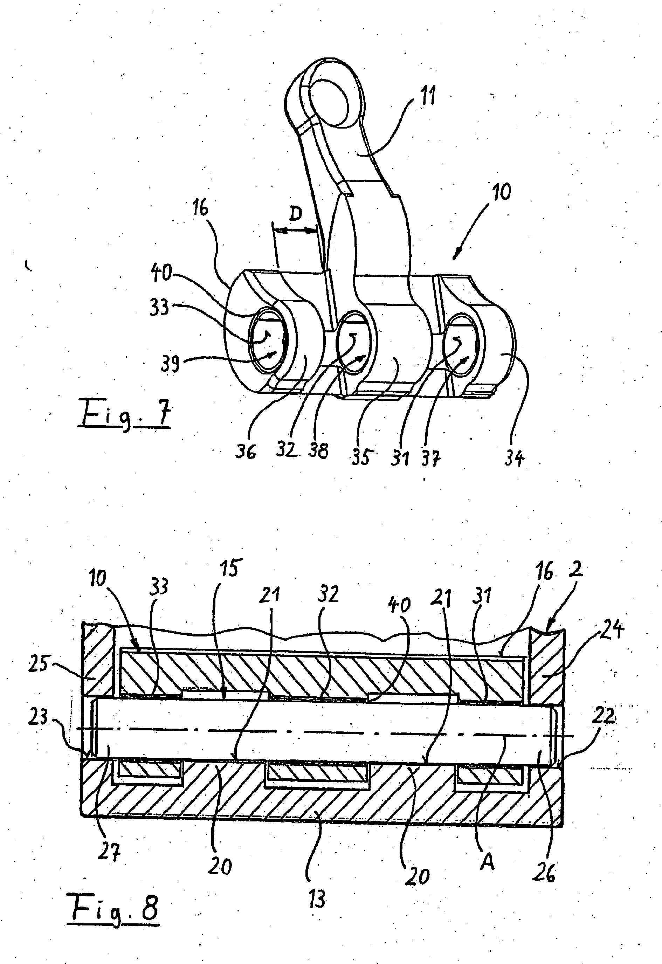

Anhand der Fig. 8 wird im Folgenden dargestellt, wie sich zur Übertragung der Zuspannkräfte der Zuspannhebel 10 an dem Bolzen 15, und dieser wiederum gegen das Gehäuse 2 abstützt. Entscheidend ist eine mehrfache örtlich Abstützung des Bolzens 15 an dem Gehäuse 2, vorzugsweise als vierfache Abstützung, d.h. auf vier unterschiedlichen Längsabschnitten des Bolzens 15, zwischen welchen Abstützorten sich jeweils Freiräume befinden.

Zunächst sind innen an dem Gehäuse 2 mit Abstand bzw. Freiraum zueinander zwei Vorsprünge 20 angeformt. Die beiden Vorsprünge 20 sind als gekrümmte Stützschalen 21 mit teilkreisförmiger Kontur gestaltet, gegen die der Bolzen 15 mit seiner zylindrischen Mantelfläche anliegt. Die Radien des Bolzens 15 und der Stützschalen 21 sind gleich, wodurch sich, über die Bolzenlänge betrachtet, zwei flächige Abstützungen des Bolzens 15 an der Rückwand 13 des Gehäuses 2 ergeben. Zwei weitere Abstützungen befinden sich an Gehäuseöffnungen 22, 23 in den Seitenwänden des Bremsgehäuses. Die Gehäuseöffnung 22 befindet sich in der einen, quer zur Bolzenlängsrichtung verlaufenden Seitenwand 24 des Gehäuses, die andere Gehäuseöffnung 23 in der gegenüberliegenden Seitenwand 25. Der Durchmesser der Gehäuseöffnung 22 entspricht, eng toleriert, dem Durchmesser des zylindrischen Bolzens 15. Auf diese Weise bildet die Gehäuseöffnung 22, soweit der Bolzen 15 mit seinem Endabschnitt 26 dort hineinragt, eine weitere Stützschale für den Bolzen 15. Ebenso kann auch die andere Gehäuseöffnung 23, soweit der Bolzen dort mit seinem anderen Endabschnitt 27 hineinreicht, eine Stützschale für den Bolzen bilden.

Da der Bolzen 15 also auf insgesamt vier Längsabschnitten in Stützschalen 21, 22, 23 gleicher Kontur gegen das Gehäuse 2 abgestützt ist, reduzieren sich jene Längsabschnitte des Bolzens auf ein Minimum, auf denen sich der Bolzen frei durchbiegen kann. Umgekehrt konzentrieren sich die bei der Zuspannung in das Gehäuse eingeleiteten Kräfte nicht auf einen oder zwei Orte, sondern sie werden an mindestens drei und vorzugsweise vier Orten in das Gehäuse eingeleitet. Zudem erfolgt diese Einleitung sowohl im Bereich der Rückwand 13 des Gehäuses, nämlich an den Stützschalen 21, wie auch im Bereich der Gehäuseseitenwände 24, 25, nämlich durch Abstützung der zylindrischen Bolzen-Endabschnitte 26, 27 in den betreffenden seitlichen Gehäuseöffnungen 22, 23, die jeweils als Bohrungen 22, 23 ausgeführt sind. Die Verformung von Gehäuse und Bremssattel bleibt daher insgesamt gering, und es kann ein relativ schlank gestalteter Bolzen 15 Verwendung finden.

Gemäß Fig. 8 ist vorgesehen, dass, korrespondierend zu den Abstützorten des Bolzens 15 an dem Gehäuse 2, sich der Zuspannhebel 10 über Stützschalen 31, 32, 33 an dem Bolzen 15 abstützt. Diese Stützschalen 31, 32, 33 sind vorzugsweise als Gleitlager ausgebildet. Jedoch können auch Wälzlager zur Anwendung kommen, welche in den Querbohrungen eingepresst und dort reibschlüssig gehalten sind. Fig. 8 lässt insbesondere erkennen, dass sich die Stützschalen 31, 32, 33 des Zuspannhebels 10 in montierten Zustand auf jenen Längsabschnitten des Bolzens 15 drehbeweglich befinden, auf denen der Bolzen 15 nicht gegenüber dem Gehäuse 2 abgestützt ist.

Zu diesem Zweck ist der Zuspannhebel wie in Fig. 7 dargestellt gestaltet. Der Zuspannhebel 10 ist, der teilzylindrischen Lagerschale 16 abgewandt, mit insgesamt drei Stegen 34, 35, 36 versehen, durch die jeweils eine Querbohrung 37, 38, 39 für den Bolzen hindurchführt. Der Durchmesser der Querbohrungen bzw. der Stützschalen 31, 32, 33 entspricht daher, bis auf geringe Toleranzen, dem Durchmesser des hindurchführenden Bolzens 15. Daher bilden die der Lagerschale 16 zugewandten Umfangsabschnitte der Querbohrungen 37, 38, 39 die bereits im Zusammenhang mit Fig. 8 erwähnten drei Stützschalen 31, 32, 33. Zur Erzielung eines reibungsarmen Verschwenkens gegenüber dem Bolzen 15 sind in die Querbohrungen 37, 38, 39 die bereits erwähnten Gleitlager in Gestalt zylindrischer Gleitlagerbuchsen 40 eingesetzt bzw. eingepresst.

Gemäß Fig. 7 ist der mittlere Steg 35 breiter, als die beiden äußeren Stege 34, 36. Die in Bolzenlängsrichtung betrachtete Distanz D zwischen den Stegen 34 und 35 bzw. 35 und 36 ist, bis auf geringe Toleranzen, gleich der axialen Erstreckung der Stützschalen 21 des Gehäuses.

Fig. 4 zeigt eine Möglichkeit der Montage und Befestigung des Bolzens 15 in dem Gehäuse. Abweichend von der mehr schematischen Darstellung der Fig. 8 ist die linke Gehäuseöffnung 23 hier zweistufig gestaltet, wobei der mehr gehäuseeinwärts gelegene Öffnungsabschnitt 43 der größere ist, und er den Endabschnitt 27 des Bolzens 15 umschließt. Zur axialen Festlegung des Bolzens 15 ist dieser an seiner der Gehäuseöffnung 23 zugewandten Stirnseite mit einem Gewindesackloch versehen, in das eine Schraube 44 eingreift. Diese stützt sich mit ihrem Schraubenkopf 45 von außen her gegen das Gehäuse 2 ab.

Das Einsetzen des zylindrischen Bolzens 15 in das Gehäuse 2 erfolgt von der ersten Gehäuseöffnung 22 her, die zu diesem Zweck eine Durchgangsbohrung sein sollte. Deren Radius ist daher, bis auf Toleranzen, gleich dem Radius des Bolzens. Ferner ist der Radius zumindest der Gehäuseöffnung 22 gleich dem Radius der beiden Stützschalen 21 und fluchtend zu diesen, wodurch alle diese Flächen in einem einzigen Arbeitsgang durch ein Bohrwerkzeug bearbeitet werden können.

Zur Realisierung einer reibschlüssigen Verdrehsicherung des Bolzens 15 kann dieser auch in die Bohrungen 22 und 23 eingepresst werden. Für eine günstige Montagesituation ist der Bolzen 15 bevorzugt mit einer Erweiterung an seinem Ende versehen, welche einen vergrößerten Durchmesser aufweist, und in der Gehäuseöffnung 22 mit Übermaß eingepresst wird. Die Gehäuseöffnung 23 wird bei dieser bevorzugten Ausgestaltung weiterhin als Übergangspassung im Vergleich zum übrigen Bolzendurchmesser ausgebildet. So ergibt sich ein leichtes Einführen des Bolzens 15 in die Gehäuseöffnung 22, durch die Querbohrungen 37, 38, 39 des Zuspannhebels 10 hindurch, vorbei an den Stützschalen 21 der Vorsprünge 20, bis die Erweiterung des Bolzens 15 von außen her an das Gehäuse 2 anschlägt und dort eingepresst wird. Der Presssitz verhindert ein Verdrehen des Bolzens 15 nicht nur im Betrieb der Bremse, sondern auch beim Anziehen der Befestigungsschraube 44 und erleichtert somit ebenfalls die Montage des Bolzens 15. Des Weiteren trägt der Presssitz zur der Verbesserung der Abdichtung bei.

Zur optimalen Herstellung der Stützschalen 21 sind dort vor der Bohrbearbeitung nasenartige Vorsprünge am Gehäuse angegossen, die jeweils eine halbkreisförmige Wölbung mit einem geringfügig kleineren Radius als der Bolzen 15 aufweisen. Diese Ausgestaltung erlaubt den optimalen Einsatz eines Stufenbohrers, der zunächst die Öffnung 22 aufbohrt, die Nasen ohne seitliches Verlaufen durchbohrt bzw. Abbohrt, und zum Schluss der Bohrbearbeitung die Öffnung 22 als Sackloch in das Gehäuse 2 einbringt. Zugleich erhält die Öffnung 22 ihr endgültiges Maß mittels einer am Bohrer ausgebildeten Stufe bzw. Erweiterung. Ein zweiter Stufenbohrer bringt anschließend den gehäuseauswärts gelegenen Öffnungsabschnitt der Öffnung 23 ein, und senkt eine Anlagefläche für den Schraubenkopf 45 der Befestigungsschraube 44 an der Außenseite des Gehäuses 2 an. Somit sind nur zwei Bohroperationen notwendig, um den Sitz des Bolzens 15 herzustellen und dessen Befestigung zu ermöglichen. Ein aufwendiges Fräsen der teilkreisförmig gekrümmten Vorsprünge 20 ist nicht erforderlich.

Ein zusätzlicher Dichtring zwischen dem Endabschnitt 26, 27 des Bolzens und der jeweiligen Gehäuseöffnung 22, 23 hilft, ein Eindringen von Schmutz und Staub in das Innere des Bremsgehäuses 2 zu verhindern.

Da die Stege 34, 35, 36 des Zuspannhebels 10 mit ihren Querbohrungen 37, 38, 39 den Bolzen über 360° umschließen, ist der Zuspannhebel 10 durch den Bolzen 15 in dem Bremsgehäuse gesichert. Für die Montage und Demontage der Zuspanneinrichtung kann dies von großem Vorteil sein. So lassen sich z.B. der Druckstempel 6 einschließlich aller Elemente der Nachstelleinrichtung in Richtung auf den Bremsbelagschacht 8 aus dem Bremsgehäuse 2 herausziehen, wobei nur der Zuspannhebel 10, gesichert durch den Bolzen 15, in dem Gehäuse 2 verbleibt. Erst nach Herausziehen des Bolzens 15 aus der Gehäuseöffnung 22 lässt sich auch der Zuspannhebel 10 entfernen.

### Bezugszeichenliste

- 1: Bremssattel
- 2: Gehäuse
- 3: Bremsscheibe
- 4: Bremsbelag
- 5: Bremsbelag
- 6: Druckstempel
- 7: Aufnahme
- 8: Belagschacht
- 10: Zuspannhebel
- 11: Hebelarm
- 12: Öffnung
- 13: Rückwand
- 15: Bolzen
- 16: Druckübertragungsfläche, Lagerschale
- 17: Krümmungs-Bezugslinie
- 20: Vorsprung
- 21: Stützschale
- 22: Gehäuseöffnung, Bohrung
- 23: weitere Gehäuseöffnung, Bohrung
- 24: Seitenwand
- 25: Seitenwand
- 26: Endabschnitt des Bolzens
- 27: Endabschnitt des Bolzens
- 31: Stützschale
- 32: Stützschale
- 33: Stützschale
- 34: Steg
- 35: Steg
- 36: Steg
- 37: Querbohrung
- 38: Querbohrung
- 39: Querbohrung
- 40: Gleitlagerbuchse
- 43: Öffnungsabschnitt
- 44: Schraube
- 45: Schraubenkopf

- A: Achse
- B: Breite des Zuspannhebels
- D: Distanz
- F: Kraft

## Patentansprüche

1. Scheibenbremse mit einer über mindestens einen Druckstempel (6) auf einen oder mehrere Bremsbeläge (4,5) arbeitenden, in einem Gehäuse (2) der Scheibenbremse angeordneten Zuspanneinrichtung, welche einen verschwenkbar gegenüber einer Rückwand (13) des Gehäuses (2) abgestützten Zuspannhebel (10) mit einem Hebelarm (11) aufweist, an dessen freiem Ende ein Kraftglied angreift, wobei der Zuspannhebel (10) dem Druckstempel (6) zugewandt mit einer als teilkreisförmige Lagerschale ausgebildeten, gekrümmten Druckübertragungsfläche (16) versehen ist, deren Krümmungs-Bezugslinie (17) parallel versetzt zu der Schwenkachse (A) des Zuspannhebels (10) liegt, und der Zuspannhebel (10) auf einem in das Gehäuse (2) eingesetzten Bolzen (15) sitzt, der sich, der Druckübertragungsfläche (16) abgewandt, an mindestens einem an der Rückwand (13) des Gehäuses (2) ausgebildeten Vorsprung (20) abstützt,
**dadurch gekennzeichnet,**
**dass** der Zuspannhebel (10) mit in Bolzenlängsrichtung versetzt zueinander angeordneten Stegen (34, 35, 36) versehen ist, und dass die Stege (34, 35, 36) mit zueinander fluchtenden Querbohrungen (37, 38, 39) versehen sind, durch die der Bolzen (15) hindurchführt.

2. Scheibenbremse nach Anspruch 1, **dadurch gekennzeichnet, dass** eine Stützschale (21) an dem Vorsprung (20) ausgebildet ist, und sich der Bolzen (15) über einen Teilumfang in der Stützschale (21) abstützt.

3. Scheibenbremse nach Anspruch 1, **gekennzeichnet durch** zwei Vorsprünge (20) mit sich in Bolzentängsrichtung beiderseits anschließenden Freiräumen.

4. Scheibenbremse nach Anspruch 2, **dadurch gekennzeichnet, dass** der Zuspannhebel (10) mit drei Stegen (34, 35, 36) und drei Querbohrungen (37, 38, 39) versehen ist.

5. Scheibenbremse nach Anspruch 1 oder 4, **dadurch gekennzeichnet, dass** zur Begrenzung der Beweglichkeit des Zuspannhebels (10) in Bolzenlängsrichtung die Stege (34, 35, 36) in Bolzenlängsrichtung spiefftei oder mit geringem Spiel an die an dem Gehäuse (2) ausgebildeten Vorsprünge (20) anschließen.

6. Scheibenbremse nach einem der vorangehenden Ansprüche, **dadurch gekennzeichnet, dass** der Bolzen (15) auf getrennten Längsabschnitten sowohl an dem mindestens einen Vorsprung (20) als auch in Bohrungen (22, 23) des Gehäuses (2) abgestützt ist, wobei sich die Bohrungen (22, 23) in Gehäuseseitenwänden (24, 25) befinden, die sich im Wesentlichen quer zur Bolzenlängsrichtung erstrecken.

7. Scheibenbremse nach Anspruch 6, **dadurch gekennzeichnet, dass** eine der Bohrungen zum Zwecke des Hindurchführens des Bolzens (15) eine zu dem Bolzen fluchtende Gehäuseöffnung (22) ist, deren Größe mindestens gleich dem Bolzenquerschnitt ist.

8. Scheibenbremse nach Anspruch 7, **dadurch gekennzeichnet, dass** das Gehäuse (2) im Bereich des anderen Bolzenendes mit einer zu der ersten Gehäuseöffnung (22) fluchtenden, zweistufigen Gehäuseöffnung (23) versehen ist, wobei der mehr gehäuseeinwärts gelegene Öffnungsabschnitt (43) der Gehäuseöffnung (23) der größere ist, und den Endabschnitt (27) des Bolzens (15) umschließt.

9. Scheibenbremse nach Anspruch 8, **dadurch gekennzeichnet, dass** zur axialen Festlegung des Bolzens (15) dieser an seiner der weiteren Gehäuseöffnung (23) zugewandten Stirnseite mit einem Gewindesackloch versehen ist, in das eine Schraube (44) eingreift, deren Schraubenkopf (45) sich von außen her an dem Gehäuse (2) abstützt.

10. Scheibenbremse nach einem der Ansprüche 7 bis 9, **dadurch gekennzeichnet, dass** die Gehäuseöffnung (22) und/oder die weitere Gehäuseöffnung (23) durch das zumindest teilweise Hineinragen eines Endabschnitts (26, 27) des Bolzens (15) verschlossen ist.

11. Scheibenbremse nach Anspruch 10, **dadurch gekennzeichnet, dass** der Endabschnitt (26, 27) des Bolzens (15) durch einen Dichtring gegenüber der Gehäuseöffnung (22, 23) abgedichtet ist.

12. Scheibenbremse nach einem der vorangehenden Ansprüche, **dadurch gekennzeichnet, dass** der Bolzen (15) gegenüber dem Gehäuse verdrehgesichert (2) ist.

13. Scheibenbremse nach Anspruch 12, **dadurch gekennzeichnet, dass** die Verdrehsicherung durch Reibschluss, insbesondere mittels eines Presssitzes des Bolzens erfolgt.

14. Scheibenbremse nach Anspruch 12 oder 13, **dadurch gekennzeichnet, dass** die Verdrehsicherung nur an einer Stelle des Gehäuses (2) erfolgt.

## Claims

1. A disc brake with a tensioning device which acts by way of at least one pressure ram (6) upon one or more brake pads (4, 5) and is arranged in a housing (2) of the disc brake and which has a tensioning lever (10) supported in a pivotable manner with respect to a rear wall (13) of the housing (2) and with a lever arm (11) at the free end of which a power member engages, wherein the tensioning lever (10) is provided, towards the pressure ram (6), with a curved pressure transmission face (16) which is designed as a bearing shell in the shape of a part circle and the curvature reference line (17) of which is situated parallel and offset with respect to the pivot axis (A) of the tensioning lever (10), and the tensioning lever (10) is mounted on a pin (15) which is inserted in the housing (2) and which, facing away from the pressure transmission face (16), is supported on at least one projection (20) formed on the rear wall (13) of the housing (2), **characterized in that** the tensioning lever (10) is provided with webs (34, 35, 36) arranged offset from one another in the longitudinal direction of the pin, and the webs (34, 35, 36) are provided with transverse bores (37, 38, 39) which are in alignment with one another and through which the pin (15) passes.

2. A disc brake according to Claim 1, **characterized in that** a protective shell (21) is formed on the projection (20), and the pin (15) is supported over part of the periphery in the protective shell (21).

3. A disc brake according to Claim 2, **characterized by** two projections (20) with free spaces adjoining on both sides in the longitudinal direction of the pin.

4. A disc brake according to Claim 2, **characterized in that** the tensioning lever (10) is provided with three webs (34, 35, 36) and three transverse bores (37, 38, 39).

5. A disc brake according to Claim 1 or 4, **characterized in that**, in order to restrict the mobility of the tensioning lever (10) in the longitudinal direction of the pin, the webs (34, 35, 36) adjoin without play or with little play in the longitudinal direction of the pin the projections (20) formed on the housing (2).

6. A disc brake according to any one of the preceding Claims, **characterized in that** the pin (15) is supported on separate longitudinal portions both on the at least one projection (20) and in bores (22, 23) in the housing (2), wherein the bores (22, 23) are situated in lateral walls (24, 25) of the housing which extend substantially transversely to the longitudinal direction of the pin.

7. A disc brake according to Claim 6, **characterized in that**, in order that the pin (15) may pass through, one of the bores is a housing opening (22) which is in alignment with the pin and the size of which is at least equal to the cross-section of the pin.

8. A disc brake according to Claim 7, **characterized in that** in the region of the other end of the pin the housing (2) is provided with a two-step housing opening (23) in alignment with the first housing opening (22), wherein the portion (43) of the housing opening (23) situated more towards the interior of the housing is the larger, and surrounds the end portion (27) of the pin (15).

9. A disc brake according to Claim 8, **characterized in that**, in order to fix the pin (15) axially, it is provided on its end face towards the further housing opening (23) with a threaded blind bore into which a screw (44) engages, the head (45) of which is supported on the housing (2) from the outside.

10. A disc brake according to any one of Claims 7 to 9, **characterized in that** the housing opening (22) and/or the further housing opening (23) is or are closed by the intrusion - at least in part - of an end portion (26, 27) of the pin (15).

11. A disc brake according to Claim 10, **characterized in that** the end portion (26, 27) of the pin (15) is sealed off from the housing opening (22, 23) by a sealing ring.

12. A disc brake according to any one of the preceding Claims, **characterized in that** the pin (15) is prevented from rotating with respect to the housing (2).

13. A disc brake according to Claim 12, **characterized in that** the prevention of rotation is carried out by friction locking, in particular by means of a press fitting of the pin.

14. A disc brake according to Claim 12 or 13, **characterized in that** the prevention of rotation is carried out only on one side of the housing (2).

## Revendications

1. Frein à disque avec un dispositif de serrage fonctionnant par l'intermédiaire d'au moins un piston de compression (6) sur une ou plusieurs garnitures de freinage (4, 5), disposé dans un carter (2) du frein à disque, qui comprend un levier de serrage (10) appuyé de manière pivotante contre une paroi arrière (13) du carter (2), avec un bras de levier (11), à l'extrémité duquel s'emboîte un organe de transmission de force, le levier de serrage (10) étant muni, du côté orienté vers le piston de compression (6), d'une surface de transmission de pression (16) incurvée, conçue comme un palier présentant une forme circulaire partielle, dont la ligne de référence de courbure (17) est décalée parallèlement à l'axe de pivotement (A) du levier de serrage (10), et le levier de serrage (10) repose sur une tige (15) insérée dans le carter (2) qui s'appuie, du côté opposé à la surface de transmission de pression (16), contre au moins une saillie (20) réalisée sur la paroi arrière (13) du carter (2),
**caractérisé en ce que**
le levier de serrage (10) est muni de nervures (34, 35, 36) disposées de manière décalée entre eux dans la direction longitudinale de la tige et **en ce que** les nervures (34, 35, 36) sont munies d'alésages transversaux (37, 38, 39) alignés entre eux, à travers lesquels passe la tige (15).

2. Frein à disque selon la revendication 1, **caractérisé en ce qu'**une coque d'appui (21) est réalisée sur la saillie (20) et la tige (15) s'appuie sur une partie de sa circonférence dans la coque d'appui (21) ;

3. Frein à disque selon la revendication 2, **caractérisé par** deux saillies (20) avec des espaces libres communiquant des deux côtés dans la direction longitudinale de la tige.

4. Frein à disque selon la revendication 2, **caractérisé en ce que** le levier de serrage (10) est muni de trois nervures (34, 35, 36) et de trois alésages transversaux (37, 38, 39).

5. Frein à disque selon la revendication 1 ou 4, **caractérisé en ce que**, pour la limitation de la mobilité du levier de serrage (10) dans la direction longitudinale, les nervures (34, 35, 36) sont reliées, dans la direction longitudinale de la tige, sans aucun jeu ou avec un faible jeu aux saillies (20) réalisées sur le carter (2).

6. Frein à disque selon l'une des revendications précédentes, **caractérisé en ce que** la tige (15) est appuyée sur des portions longitudinales séparées sur l'au moins une saillie (20) ainsi que dans des alésages (22, 23) du carter (2), les alésages (22, 23) se trouvant dans des parois latérales du carter (24, 25) qui s'étendant globalement transversalement par rapport à la direction longitudinale de la tige.

7. Frein à disque selon la revendication 6, **caractérisé en ce qu'**un des alésages permettant le passage de la tige (15) est une ouverture de carter (22) alignée avec la tige, dont la taille est au moins égale la section de la tige.

8. Frein à disque selon la revendication 7, **caractérisé en ce que** le carter (2) est muni, au niveau de l'autre extrémité de tige, d'une ouverture de carter (23) à deux échelons, alignée avec la première ouverture de carter (22), la portion d'ouverture (43) de l'ouverture de carter (23) située plus du côté de l'intérieur du carter étant la plus grande et entourant la portion d'extrémité (27) de la tige (15).

9. Frein à disque selon la revendication 8, **caractérisé en ce que**, pour la fixation axiale de la tige (15), celle-ci est munie, au niveau de son côté frontal orienté vers l'autre ouverture de carter (23) d'un trou borgne taraudé dans laquelle s'emboîte une vis (44) dont la tête (45) s'appuie de l'extérieur contre le carter (2).

10. Frein à disque selon l'une des revendications 7 à 9, **caractérisé en ce que** l'ouverture de carter (22) et/ou l'autre ouverture de carter (23) est obturée par le dépassement au moins partiel d'une portion d'extrémité (26, 27) de la tige (15).

11. Frein à disque selon la revendication 10, **caractérisé en ce que** la portion d'extrémité (26, 27) de la tige (15) est étanchéifiée par une bague d'étanchéité vis-à-vis de l'ouverture de carter (22, 23).

12. Frein à disque selon l'une des revendications précédentes, **caractérisé en ce que** la tige (15) est protégé contre une rotation par rapport au carter (2).

13. Frein à disque selon la revendication 12, **caractérisé en ce que** la protection anti-rotation est assurée par friction, plus particulièrement à l'aide d'un ajustement serré de la tige.

14. Frein à disque selon la revendication 12 ou 13, **caractérisé en ce que** la protection anti-rotation est assurée uniquement à un endroit du carter (2).
